# FASCICULE DE BREVET EUROPEEN

(11) **EP 1 799 449 B1**
(45) Date de publication et mention de la délivrance du brevet: **10.11.2010**
(21) Numéro de dépôt: 05797538.5
(22) Date de dépôt: 29.08.2005
(51) Int. Cl.: B32B 17/10

(54) **PROFILE D'AMORTISSEMENT ACOUSTIQUE ASSOCIE ENTRE UN VITRAGE ET LA CARROSSERIE D'UN VEHICULE**
ZWISCHEN EINER FENSTERSCHEIBE UND DER FAHRZEUGKAROSSERIE ANGEORDNETER SCHALLDÄMPFUNGSABSCHNITT
ACOUSTIC DAMPING SECTION WHICH IS DISPOSED BETWEEN A WINDOW PANEL AND THE BODY OF A VEHICLE

(30) Priorité: 16.09.2004 FR 0409807
(43) Date de publication de la demande: 27.06.2007
(73) Titulaire: Saint-Gobain Glass France S.A., 92400 Courbevoie (FR)
(72) Inventeur: CHARLIER, Julien, F-02400 CHATEAU THIERRY (FR)
(74) Mandataire: Aupetit, Muriel J. C.
(86) Numéro de dépôt international: PCT/FR2005/050688
(87) Numéro de publication internationale: WO 2006/032802

(56) Documents cités:
- EP-A- 0 844 075
- WO-A-2004/039581
- DE-A1- 19 543 192
- DE-A1- 19 806 122
- FR-A- 2 843 227
- US-A1- 2001 051 260

## Description

La présente invention concerne un profilé destiné à être associé entre une carrosserie de véhicule et un vitrage dans le but de constituer un moyen d'amortissement acoustique pour absorber les ondes vibratoires se propageant au travers du vitrage et de la carrosserie du véhicule.

Un tel profilé peut notamment être utilisé pour des vitrages de véhicule, en particulier automobile, en vue d'améliorer le confort acoustique en son intérieur.

Dans un véhicule automobile, les sources de désagrément d'origine mécanique, thermique, de visibilité, etc... ont été peu à peu maîtrisées. Mais l'amélioration du confort acoustique reste toujours d'actualité.

Les bruits d'origine aérodynamique, c'est-à-dire créés par le frottement de l'air sur le véhicule en déplacement, ont pu, au moins en partie, être eux-mêmes traités à leur source, c'est-à-dire que pour économiser l'énergie, les formes ont été modifiées en améliorant ainsi la pénétration dans l'air et en diminuant les turbulences qui sont elles-mêmes source de bruits. Parmi les parois d'un véhicule qui séparent la source de bruits aérodynamiques extérieure de l'espace intérieur où se trouve le passager, les vitrages sont évidemment les plus difficiles à traiter. On ne peut utiliser des absorbants pâteux ou fibreux réservés aux parois opaques et pour des raisons pratiques ou de poids, les épaisseurs ne peuvent être augmentées inconsidérément. Le brevet européen EP-B1-0 387 148 propose des vitrages qui réalisent une bonne isolation contre les bruits d'origine aérodynamique sans que leur poids et/ou leur épaisseur soient trop augmentés. Le brevet propose ainsi un vitrage feuilleté dont l'intercalaire possède un amortissement à la flexion ν = Δf/f_{c} supérieur à 0,15, la mesure étant effectuée en excitant par un choc un barreau feuilleté de 9 cm de longueur et 3 cm de largeur fait d'un verre feuilleté où la résine est entre deux verres épais chacun de 4 mm, et en mesurant f_{c}, fréquence de résonance du premier mode, et Δf, largeur du pic à une amplitude A/√2 où A est l'amplitude maximum à la fréquence f_{c} de telle sorte que son indice d'affaiblissement acoustique ne se différencie pour aucune des fréquences supérieures à 800 Hz de plus de 5 dB d'un indice de référence augmentant de 9 dB par octave jusqu'à 2000 Hz et de 3 dB par octave aux fréquences supérieures. De plus, l'écart-type σ des différences de son indice d'affaiblissement acoustique par rapport à l'indice de référence reste inférieur à 4 dB. Les épaisseurs des deux verres peuvent être identiques et égales à 2,2 mm. Ce brevet propose ainsi une solution générale au problème de l'isolement acoustique aux bruits aérodynamiques d'un véhicule.

Par contre, le traitement des vitrages contre les bruits d'origine solidienne, c'est-à-dire contre les bruits transmis par l'intermédiaire des solides et dans le domaine de fréquences de 50 à 300 Hz voire 800 Hz, est plus difficile à réaliser. En effet, il s'avère que l'emploi de pièces de liaison reste insuffisant pour éviter la transmission du bruit par vibration des vitrages. Il a été constaté, à cet effet, qu'à certaines vitesses de rotation du moteur, un bourdonnement perceptible par le passager apparaissait et causait ainsi une source de désagrément. En effet, la rotation du moteur provoque la création de vibrations qui se transmettent, par exemple, à la carrosserie et ainsi, par effet de chaîne, aux vitrages. On sait que l'énergie acquise par un objet soumis à un choc engendre un phénomène de vibration et qu'aussitôt après le choc, l'objet redevenu libre vibre selon son propre mode. A chaque mode est associé une fréquence de vibration. L'amplitude de la vibration dépend de l'excitation initiale, c'est-à-dire de la composante spectrale du choc (amplitude du choc à la fréquence étudiée) et de la zone d'impact du choc, la déformation modale étant plus ou moins importante selon que le choc se produit à un ventre ou à un noeud de vibration.

Pour qu'un mode propre soit excité, il faut :
(1) que la déformation provoquée au point d'impact ne se situe pas sur un noeud de vibration du mode,
(2) que le spectre d'énergie de choc ait une composante à la fréquence de résonance du mode.

Cette dernière condition est pratiquement toujours remplie, car un choc très bref présente un spectre d'énergie pratiquement uniforme.

La première condition est également remplie et, pour un barreau libre à ses extrémités, par exemple, il suffit de taper à l'une des extrémités pour exciter tous les modes de flexion.

L'excitation solidienne est périphérique et il a été mis en évidence qu'à certaines fréquences de vibration du moteur, c'est-à-dire à certaines vitesses de rotation du moteur, l'un au moins des vitrages a un mode de vibration et l'habitacle du véhicule a un mode acoustique, le couplage entre ces deux modes amplifiant le bourdonnement, issu du rayonnement acoustique par les vitrages de l'énergie provenant en l'occurrence du moteur. Bien entendu, la vitesse de rotation du moteur à l'origine de ces phénomènes est particulière à chaque type de véhicule et ne peut être ainsi généralisée à une unique valeur.

Aussi, pour améliorer le confort acoustique dans l'habitacle du véhicule vis-à-vis des bruits d'origine solidienne, le brevet EP 0 844 075 propose un vitrage feuilleté comprenant au moins un film intercalaire possédant des qualités d'amortissement des sons audibles d'origine solidienne très satisfaisantes car possédant un facteur de perte tanδ supérieur à 0,6 et un module de cisaillement G' inférieure à 2.10⁷ N/m², dans un domaine de température compris entre 10 et 60°C.

Une solution alternative ou complémentaire à l'utilisation d'un vitrage à propriété d'amortissement acoustique peut consister à associer à la périphérie du vitrage un profilé à propriété d'amortissement acoustique. De la demande de brevet WO 04/012952, on connaît un profilé qui, pour assurer une telle propriété d'amortissement acoustique, doit présenter une raideur linéique réelle équivalente K'_{eq} au moins égale à 25 MPa, en combinaison à un facteur de perte équivalent tanδ_{eq} au moins égal à 0,25.

La raideur linéique équivalente est la raideur équivalente du profilé rapportée à un mètre linéaire de profilé.

La raideur équivalente est la raideur de l'ensemble du profilé quels que soient le nombre de matériaux et leur constitution.

La raideur est une grandeur qui relie les déformations du profilé aux efforts qui lui sont appliqués. La raideur est définie par la rigidité des matériaux constituant le profilé et par la géométrie du profilé, la rigidité étant une grandeur caractéristique du matériau qui est fonction du module d'Young et/ou du module de cisaillement. Le module d'Young est lié aux contraintes et déformations subies par le matériau selon un travail en traction-compression, tandis que le module de cisaillement est lié aux contraintes et déformations subies par le matériau selon un travail en cisaillement.

Le facteur de perte équivalent tanδ_{eq} est le facteur de perte de l'ensemble du profilé quels que soient le nombre de matériaux et leur constitution.

Le facteur de perte est défini par le rapport entre le pouvoir de dissipation, c'est-à-dire la transformation de l'énergie de déformation du profilé en énergie calorifique dans l'ensemble du profilé, et la raideur linéique .

Pour connaître la raideur linéique réelle équivalente K'_{eq} et le facteur de perte équivalent tanδ_{eq} d'un profilé constitué d'un ou plusieurs matériaux, ces grandeurs sont estimées à l'aide d'un viscoanalyseur. Le viscoanalyseur mesure la raideur réelle équivalente k'_{eq} et le pouvoir de dissipation équivalent k"_{eq} d'un échantillon de profilé de section identique à celle du profilé et de longueur L puis on effectue les calculs suivants :
- rapport entre la raideur réelle équivalente mesurée et la longueur L du profilé pour obtenir la raideur réelle linéique équivalente K'_{eq} du profilé;
- rapport entre le pouvoir de dissipation équivalent mesuré et la raideur réelle équivalente mesurée pour obtenir le facteur de perte équivalent tanδ_{eq} du profilé.

Dans ce type de profilé cité ci-dessus, seules sont prises en compte les contraintes et déformations subies par les matériaux selon un travail en traction-compression dans la direction normale au vitrage, le travail en cisaillement étant négligeable. En effet, la carrosserie est tellement rigide par rapport au profilé qu'elle ne se déforme pas et ne peut pas absorber l'énergie vibratoire. Seul le profilé se déforme de manière significative et dissipe de l'énergie mécanique par un travail en traction compression principalement.

Or les inventeurs se sont aperçus que pour certains types de véhicules, la carrosserie peut ne pas être aussi rigide, de sorte qu'elle se déforme et réduit le travail du profilé et donc la dissipation d'énergie mécanique par ce profilé. Aussi avec un profilé présentant les caractéristiques citées ci-dessus avec une raideur linéique réelle équivalente K'_{eq} au moins égale à 25 MPa, en combinaison à un facteur de perte équivalent tanδ_{eq} au moins égal à 0,25, la performance de réduction du bruit n'est en fait pas celle attendue.

L'invention a donc pour but d'apporter une autre solution de profilé à propriété d'amortissement acoustique qui puisse pleinement assurer sa fonction lorsqu'il est fixé à une carrosserie dont les déformations limitent le travail du profilé dans la direction normale au vitrage.

Selon l'invention, le profilé constitue un moyen d'amortissement acoustique lorsque soumis à l'action d'un champ vibratoire, il assure un travail en cisaillement lié aux mouvements locaux du vitrage dans son plan tandis que la carrosserie se déforme dans la direction normale au vitrage caractérisé en ce que la dissipation par un travail en cisaillement du profilé est définie par le facteur de surtension A que possède le profilé, ce facteur de surtension étant inférieur ou égal à 4 et déterminé par le rapport de la réceptance maximale R₁ sur la réceptance quasi-statique en cisaillement R₀, la réceptance R(f) étant la fonction de réponse en fréquence donnant le rapport du déplacement en fonction de la fréquence d'une masselotte sur l'effort qui lui est injecté, la masselotte étant montée entre deux supports métalliques au moyen de deux échantillons du profilé, et la réceptance R₀ du profilé étant supérieure à 3.10⁻⁶ m/N. Un profilé selon le préambule de la revendication 1 est connu du document FR 2 843 227 A.

La réceptance maximale R₁ est définie comme la valeur de la réceptance R(f) sur le maximum local dont la fréquence est la plus basse et qui correspond au mode de suspension de la masselotte sur l'échantillon de profilé. La fréquence à laquelle ce maximum est atteint est notée f₁.

La réceptance quasi-statique en cisaillement R₀ est définie comme la valeur de la réceptance R(f) mesurée lorsque la fréquence vaut f₁/10.

Le facteur de surtension A est donc défini par le rapport de la réceptance maximale sur la réceptance quasi-statique en cisaillement R₁/R₀.

Selon une caractéristique, le profilé est constitué d'un seul ou de plusieurs matériaux accolés.

De préférence, le ou les matériaux présentent des propriétés de collage avec au moins le vitrage et/ou la carrosserie.

Un exemple préférentiel de matériau est un polyuréthanne monocomposant et plus particulièrement un polyuréthanne monocomposant modifié par des terminaisons silane, le matériau présentant une double transition vitreuse, dans deux zones de température bien distinctes.

Selon une autre caractéristique, le profilé présente une section uniforme ou non sur toute ou partie de sa longueur.

Le profilé est appliqué sur l'un au moins des éléments formant le vitrage et la carrosserie par un procédé d'extrusion, et/ou d'encapsulation, et/ou de transfert à partir d'un moulage, et/ou de moulage par injection.

Le profilé peut être associé à la carrosserie d'un véhicule automobile, le vitrage du véhicule pouvant notamment être un vitrage feuilleté qui comporte au moins deux feuilles de verre et un film à propriétés acoustiques. On se reportera aux demandes de brevet EP 0 100 701 et EP 0 844 075 quant aux critères que doit remplir un film à propriétés acoustiques.

L'invention propose aussi un procédé pour déterminer la propriété dissipative d'un profilé destiné à être associé entre une carrosserie de véhicule et un vitrage, le procédé étant caractérisé en ce qu'il consiste à établir le facteur de surtension A du profilé qui est déterminé par le rapport de la réceptance maximale R₁ sur la réceptance quasi-statique en cisaillement R₀, la réceptance étant la fonction de réponse en fréquence donnant le rapport du déplacement en fonction de la fréquence d'une masselotte sur l'effort qui lui est injecté, la masselotte étant montée entre deux supports métalliques au moyen de deux échantillons de profilé, le profilé ayant des propriétés dissipatives lorsque le facteur de surtension A est inférieur ou égal à 4 et la réceptance quasi-statique de cisaillement R₀ est supérieure à 3.10⁻⁶ m/N.

Les inventeurs ont donc mis en évidence l'intérêt d'une utilisation d'un profilé associé entre un vitrage et une carrosserie de véhicule pour la dissipation d'énergie vibratoire à l'origine de bruit rayonné par les vitrages et/ou la carrosserie, lorsque le profilé assure un travail en cisaillement associé à des mouvements locaux du vitrage dans son plan tandis que la carrosserie se déforme dans la direction normale au vitrage.

Dans son utilisation de dissipation de l'énergie vibratoire, le profilé présente avantageusement les caractéristiques citées ci-dessus. Il conviendra de choisir le matériau adéquat ainsi que les dimensions appropriées selon les extensions les plus petites (hauteur et largeur) du profilé pour parvenir au facteur de surtension inférieur ou égal à 4.

D'autres avantages et caractéristiques de l'invention apparaîtront dans la suite de la description en regard des dessins annexés sur lesquels :
- la figure 1 est une vue partielle en coupe d'un profilé selon l'invention associé entre la carrosserie d'un véhicule et un vitrage;
- la figure 2 illustre schématiquement le dispositif utilisé pour mesurer la réceptance permettant de caractériser le profilé;
- la figure 3 montre des courbes sur des mesures comparatives de transfert-bruit en fonction de la fréquence qui ont été faites sur un véhicule comportant notamment un profilé de l'invention.

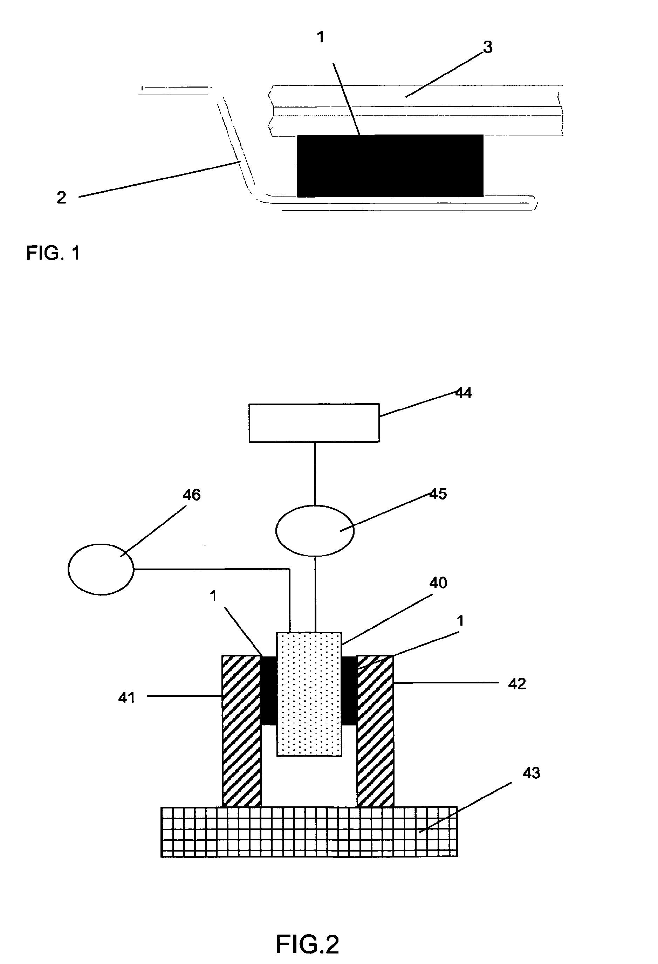

La figure 1 représente une vue partielle schématique d'un profilé 1 d'amortissement acoustique qui est associé entre la carrosserie 2 et le vitrage 3 d'un véhicule, par exemple un véhicule automobile. L'amortissement acoustique généré par ce profilé résulte de sa capacité à travailler en cisaillement, selon une déformation parallèle au plan du vitrage, tandis que la carrosserie est apte à travailler en traction-compression.

Le profilé peut être constitué d'un unique matériau ou de plusieurs matériaux agencés en strates telles q'un empilement de matériaux selon la hauteur et/ou la largeur du profilé.

Sa fonction de dissiper de l'énergie par un travail en cisaillement est définie par le facteur de surtension A que possède le profilé. Selon l'invention, ce facteur de surtension doit être égal ou inférieur à 4.

Comme expliqué plus haut, le facteur de surtension A est déterminé par le calcul du rapport de la réceptance maximale R₁ sur la réceptance quasi-statique en cisaillement R₀.

Pour connaître les propriétés d'amortissement acoustique ou non d'un profilé, il convient ainsi d'établir son facteur de surtension A.

Le mode opératoire illustré schématiquement sur la figure 2 pour la mesure de la réceptance est le suivant : une masselotte 40 de masse 0,025 kg et composée d'un bloc parallélépipédique rectangle en acier est fixée entre deux montants en acier 41 et 42 à l'aide de deux échantillons du profilé 1. Les montants sont eux-mêmes rendus solidaires d'un marbre 43 par exemple au moyen d'un collage adapté. La solidarisation des montants, des échantillons du profilé et de la masselotte est assurée par collage rigide, par exemple au moyen d'une colle cyanoacrylate, sans autre précontrainte que celle due au poids propre des différentes pièces. Les échantillons du profilé sont de longueur 0,02 m et ont la même section que lors du montage entre la carrosserie et le vitrage. Ils sont orientés de manière à être positionnés entre un montant et la masselotte comme entre la carrosserie et le vitrage.

La masselotte est excitée en vibrations à l'aide d'un pot électrodynamique 44 qui lui est relié par l'intermédiaire d'un capteur de force 45. Le signal d'effort délivré par le pot électrodynamique est composé d'un bruit blanc au moins sur la bande de fréquence 40-1 000 Hz. On note F l'effort mesuré par le capteur de force 45, en N.

Simultanément, l'accélération de la masselotte 40 est mesurée à l'aide d'un accéléromètre 46 dont la masse est inférieure à 0,005 kg. On note y l'accélération mesurée par l'accéléromètre 46, en m/s².

L'effort injecté par le pot électrodynamique et l'accélération de la masselotte sont mesurés dans la même direction, orientée parallèlement à la longueur des échantillons du profilé et dans le plan médian des deux montants. De ce fait, les mouvements de la masselotte se traduisent par un travail des échantillons de profilé en cisaillement, dans leur direction longitudinale.

Le module de la fonction de réponse en fréquence [γ/F] reliant l'accélération mesurée à l'effort injecté dans la masselotte, en fonction de la fréquence, est déterminé en bandes fines. La réceptance R(f) en fonction de la fréquence f s'en déduit comme suit : R(f)=|γ/F|/(2πf)².

On détermine la réceptance maximale R₁ qui est définie comme la valeur de la réceptance R(f) sur le maximum local dont la fréquence est la plus basse et qui correspond au mode de suspension en translation de la masselotte sur les échantillons de profilé, dans la direction longitudinale des échantillons de profilé. La fréquence à laquelle ce maximum est atteint est notée f₁.

La réceptance quasi-statique en cisaillement R₀ est définie comme la valeur de la réceptance R(f) mesurée lorsque la fréquence vaut f₁/10.

Après avoir déterminé R₁ et R₀, le facteur de surtension A est calculé selon le rapport R₁/R₀. Il est donné ci-après deux exemples de profilés P1 et P2 répondant, et respectivement ne répondant pas, au critère du facteur de surtension A inférieur ou égal à 4.Le profilé P1 de l'invention est constitué d'un cordon rectangulaire de largeur 10 mm et d'épaisseur 5 mm en polyuréthanne monocomposant et plus particulièrement en polyuréthanne monocomposant modifié par des terminaisons silane, le produit présentant une double transition vitreuse, dans deux zones de température bien distinctes. Il présente la propriété de collage du verre à la carrosserie. Son facteur de surtension, déterminé selon le protocole exposé précédemment, vaut 1,3.

Le profilé P2 est constitué d'un cordon rectangulaire de largeur 12 mm et d'épaisseur 6 mm en mastic polyuréthanne, par exemple du Gurit commercialisé par la société Dow Automotive, matériau bien connu dans la construction automobile pour assurer la fixation du vitrage à la carrosserie. Son facteur de surtension, déterminé selon le protocole exposé précédemment, vaut 5,2.

Ces deux profilés ont été utilisés séparément pour fixer un vitrage monolithique sur une carrosserie automobile. Dans les deux cas, une mesure des transferts-bruits a été effectuée : la mesure simultanée de l'effort injecté par un marteau de choc sur le vitrage et du bruit intérieur généré par ce même choc permet d'en déduire la fonction de réponse en fréquence [p/F], appelée transfert-bruit, p étant la pression acoustique mesurée au niveau des oreilles d'un passager et F étant l'effort produit par le marteau de choc au centre du vitrage.

Le transfert-bruit est d'autant plus élevé que le couplage vibroacoustique entre le vitrage et la caisse automobile est élevé. En d'autres termes, une amélioration acoustique est obtenue lorsque le niveau du transfert-bruit est diminué.

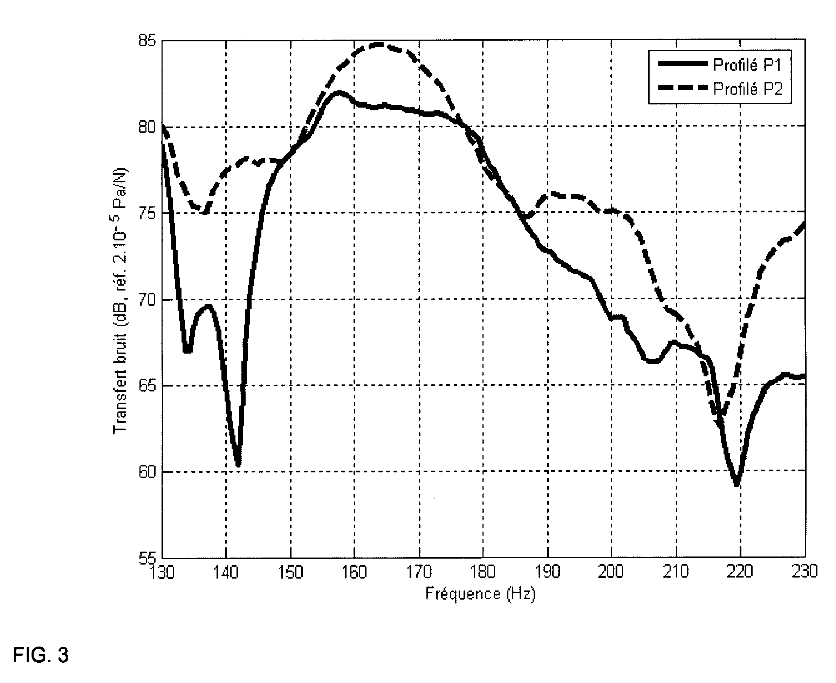

La figure 3 présente les résultats de transfert-bruit obtenus avec les profilés P1 et P2 en fonction de la fréquence sur la plage 130-230 Hz. On constate que l'usage du profilé P1, satisfaisant le critère du facteur de surtension inférieur ou égal à 4, permet de réduire le transfert-bruit et donc d'améliorer la performance acoustique du système vitrage-carrosserie.

## Revendications

1. Profilé d'étanchéité (1) destiné à être associé entre une carrosserie (2) de véhicule et un vitrage (3), où le profilé constitue un moyen d'amortissement acoustique lorsque soumis à l'action d'un champ vibratoire, il assure un travail en cisaillement associé à des mouvements locaux du vitrage dans son plan, tandis que la carrosserie se déforme dans la direction de la normale locale au vitrage, **caractérisé en ce que** le travail en cisaillement du profilé est défini par le facteur de surtension A que possède le profilé, ce facteur de surtension étant inférieur ou égal à 4 et déterminé par le rapport de la réceptance maximale R₁ sur la réceptance quasi-statique en cisaillement R₀, la réceptance étant la fonction de réponse en fréquence donnant le rapport du déplacement en fonction de la fréquence d'une masselotte sur l'effort qui lui est injecté, la masselotte étant montée entre deux supports métalliques au moyen d'échantillons du profilé, et **en ce que** la réceptance R₀ du profilé est supérieure à 3.10⁻⁶ m/N.

2. Profilé selon l'une quelconque des revendications précédentes, **caractérisé en ce que** le profilé est constitué d'un seul ou de plusieurs matériaux accolés.

3. Profilé selon la revendication 2, **caractérisé en ce que** le ou les matériaux présentent des propriétés de collage avec au moins le vitrage et/ou la carrosserie.

4. Profilé selon l'une quelconque des revendications précédentes, **caractérisé en ce que** le matériau du profilé est constitué de polyuréthanne monocomposant et plus particulièrement de polyuréthanne monocomposant modifié par des terminaisons silane, le matériau présentant une double transition vitreuse, dans deux zones de température bien distinctes.

5. Profilé selon l'une quelconque des revendications précédentes, **caractérisé en ce qu'**il est appliqué sur l'un au moins des éléments formant le vitrage et la carrosserie par un procédé d'extrusion, et/ou d'encapsulation, et/ou de transfert à partir d'un moulage, et/ou de moulage par injection.

6. Profilé selon l'une quelconque des revendications précédentes, **caractérisé en ce que** le profilé présente une section uniforme ou non sur toute ou partie de sa longueur.

7. Profilé selon l'une quelconque des revendications précédentes, **caractérisé en ce qu'**il est associé à la carrosserie d'un véhicule automobile.

8. Profilé selon l'une quelconque des revendications précédentes, **caractérisé en ce qu'**il est associé à un vitrage feuilleté comportant au moins deux feuilles de verre et un film à propriétés acoustiques.

9. Procédé pour déterminer la propriété dissipative d'un profilé destiné à être associé entre une carrosserie de véhicule et un vitrage, le procédé étant **caractérisé en ce qu'**il consiste à établir le facteur de surtension A du profilé qui est déterminé par le rapport de la réceptance maximale R₁ sur la réceptance quasi-statique en cisaillement R₀, la réceptance étant la fonction de réponse en fréquence donnant le rapport du déplacement en fonction de la fréquence d'une masselotte sur l'effort qui lui est injecté, la masselotte étant montée entre deux supports métalliques au moyen d'échantillons du profilé ,le profilé ayant des propriétés dissipatives lorsque le facteur de surtension A est inférieur ou égal à 4 et que la réceptance R₀ du profilé est supérieure à 3.10⁻⁶ m/N.

10. Utilisation d'un profilé selon l'une quelconque des revendications 1 à 8, associé entre un vitrage et une carrosserie de véhicule pour l'amortissement acoustique d'un rayonnement vibratoire auquel est exposé le vitrage et/ou la carrosserie.

## Claims

1. A sealing strip (1) intended to be combined between a vehicle bodywork (2) and glazing (3), wherein the strip constitutes an acoustic damping means when subjected to the action of a vibrational field; it works in shear combined with local movements of the glazing in its plane, while the bodywork deforms in the direction of the local normal to the glazing, **characterized in that** the work of the strip in shear is defined by the Q-factor A that the strip has, this Q-factor being less than or equal to 4 and determined by the ratio of the maximum receptance R₁ to shear-mode quasi-static receptance R₀, the receptance being the frequency response function that gives rise to the ratio of the frequency-dependent displacement of a weight to the force applied to it, the weight being mounted between two metal supports by means of specimens of the strip, and **in that** the receptance R₀ of the strip is greater than 3 · 10⁻⁶ m/N.

2. The strip as claimed in any one of the preceding claims, **characterized in that** the strip is made of just one or several materials stacked together.

3. The strip as claimed in claim 2, **characterized in that** the material or materials has or have properties of adhesion with at least the glazing and/or the bodywork.

4. The strip as claimed in any one of the preceding claims, **characterized in that** the material of the strip is a one-component polyurethane and, more particularly, silane-terminated one-component polyurethane, the material having two glass transitions, in two very distinct temperature regions.

5. The strip as claimed in any one of the preceding claims, **characterized in that** it is applied to at least one of the elements that are the glazing and the bodywork by a method of extrusion and/or encapsulation and/or transfer from a molding and/or injection molding.

6. The strip as claimed in any one of the preceding claims, **characterized in that** the strip has a uniform or non-uniform cross section over all or part of its length.

7. The strip as claimed in any one of the preceding claims, **characterized in that** it is combined with the bodywork of a motor vehicle.

8. The strip as claimed in any one of the preceding claims, **characterized in that** it is combined with laminated glazing comprising at least two sheets of glass and a film with acoustic properties.

9. A method for determining the dissipative property of a strip intended to be combined between a vehicle bodywork and glazing, the method being **characterized in that** it consists in establishing the Q-factor A of the strip which is determined as the ratio of the maximum receptance R₁ to the shear-mode quasi-static receptance R₀, the receptance being the frequency response function that gives the ratio of the frequency-dependent displacement of a weight to the force applied to it, the weight being mounted between two metal supports by means of specimens of the strip, the strip having dissipative properties when the Q-factor A is less than or equal to 4 and that the receptance R₀ of the strip is greater than 3 · 10⁻⁶ m/N.

10. The use of a strip as claimed in any one of claims 1 to 8, combined between a vehicle glazing and bodywork for acoustic damping of vibrational radiation to which the glazing and/or the bodywork is exposed.

## Patentansprüche

1. Dichtungsprofil (1), das dazu bestimmt ist, zwischen einer Fahrzeugkarosserie (2) und einer Verglasung (3) eingefügt zu werden, wobei das Profil ein Schalldämpfungsmittel bildet, wenn es der Wirkung eines Schwingungsfeldes ausgesetzt ist, es eine mit örtlich begrenzten Bewegungen der Verglasung in ihrer Ebene verbundene Scherarbeit sicherstellt, während die Karosserie sich in Richtung der örtlichen Normalen zur Verglasung verformt, **dadurch gekennzeichnet, dass** die Scherarbeit des Profils durch den Überspannungsfaktor A, den das Profil besitzt, definiert ist, wobei dieser Überspannungsfaktor kleiner oder gleich 4 ist und durch das Verhältnis von maximaler Rezeptanz R₁ zu quasistatischer Rezeptanz bei Scherbeanspruchung R₀ bestimmt ist, wobei die Rezeptanz die Frequenzgangfunktion ist, die das Verhältnis zwischen der Bewegung eines Gewichts in Abhängigkeit der Frequenz und der Kraft, mit der es beaufschlagt wird, wiedergibt, wobei das Gewicht mittels Proben des Profils zwischen zwei Metallträgern angebracht ist, und dass die Rezeptanz R₀ des Profils größer als 3·10⁻⁶ m/N ist.

2. Profil nach einem der vorstehenden Ansprüche, **dadurch gekennzeichnet, dass** das Profil aus einem einzigen oder aus mehreren miteinander verbundenen Materialien besteht.

3. Profil nach Anspruch 2, **dadurch gekennzeichnet, dass** das oder die Materialien Eigenschaften zum Verkleben mit wenigstens der Verglasung und/oder der Karosserie aufweisen.

4. Profil nach einem der vorstehenden Ansprüche, **dadurch gekennzeichnet, dass** das Material des Profils von einkomponentigem Polyurethan und insbesondere von einkomponentigem Polyurethan, das durch Silan-Endgruppen modifiziert ist, gebildet ist, wobei das Material einen zweifachen Glasübergang in zwei sehr unterschiedlichen Temperaturbereichen aufweist.

5. Profil nach einem der vorstehenden Ansprüche, **dadurch gekennzeichnet, dass** es auf wenigstens eines der die Verglasung und die Karosserie bildenden Elemente durch ein Extrusions- und/oder Einkapselungs- und/oder Transferverfahren auf Grundlage eines Formens und/oder durch ein Spritzgießverfahren aufgebracht wird.

6. Profil nach einem der vorstehenden Ansprüche, **dadurch gekennzeichnet, dass** das Profil einen gleichmäßigen oder nicht gleichmäßigen Querschnitt über seine gesamte Länge oder einen Teil dieser aufweist.

7. Profil nach einem der vorstehenden Ansprüche, **dadurch gekennzeichnet, dass** es mit der Karosserie eines Kraftfahrzeugs verbunden ist.

8. Profil nach einem der vorstehenden Ansprüche, **dadurch gekennzeichnet, dass** es mit einem Verbundglas, das wenigstens zwei Glasscheiben und einen Film mit akustischen Eigenschaften umfasst, verbunden ist.

9. Verfahren zur Bestimmung der dissipativen Eigenschaft eines Profils, das dazu bestimmt ist, zwischen einer Fahrzeugkarosserie und einer Verglasung eingefügt zu werden, wobei das Verfahren **dadurch gekennzeichnet ist, dass** es darin besteht, den Überspannungsfaktor A des Profils festzulegen, der durch das Verhältnis von maximaler Rezeptanz R₁ zu quasistatischer Rezeptanz bei Scherbeanspruchung R₀ bestimmt ist, wobei die Rezeptanz die Frequenzgangfunktion ist, die das Verhältnis zwischen der Bewegung eines Gewichts in Abhängigkeit der Frequenz und der Kraft, mit der es beaufschlagt wird, wiedergibt, wobei das Gewicht mittels Proben des Profils zwischen zwei Metallträgern angebracht ist, wobei das Profil dissipative Eigenschaften aufweist, wenn der Überspannungsfaktor A kleiner oder gleich 4 ist und die Rezeptanz R₀ des Profils größer als 3·10⁻⁶ m/N ist.

10. Verwendung eines Profils nach einem der Ansprüche 1 bis 8, das zwischen einer Verglasung und einer Fahrzeugkarosserie eingefügt ist, zur Schalldämpfung einer Schwingungsstrahlung, der die Verglasung und/oder die Karosserie ausgesetzt ist.
